# NEUE EUROPÄISCHE PATENTSCHRIFT

(11) **EP 0 853 755 B2**
(45) Veröffentlichungstag und Bekanntmachung des Hinweises auf die Entscheidung über den Einspruch: **09.11.2005**
(45) Hinweis auf die Patenterteilung: 01.09.1999
(21) Anmeldenummer: 96938959.2
(22) Anmeldetag: 01.10.1996
(51) Int. Cl.: G01G 11/00

(54) **BUNKERABZUGS- UND AUFGABEPLATTENBAND MIT AUTOMATISCHER WIEGE- UND DOSIEREINRICHTUNG FÜR SCHÜTTGÜTER**
SILO REMOVAL AND DISCHARGE PLATE CONVEYER WITH AUTOMATIC BULK MATERIAL WEIGHING AND METERING ARRANGEMENT
BANDE D'EXTRACTION SOUS SILOS ET D'EVACUATION A PLAQUES COMPORTANT UN DISPOSITIF AUTOMATIQUE DE PESAGE ET DE DOSAGE POUR PRODUITS EN VRAC

(30) Priorität: 03.10.1995 DE 19536871
(43) Veröffentlichungstag der Anmeldung: 22.07.1998
(73) Patentinhaber: Maschinenfabrik BESTA GmbH & Co., 40878 Ratingen (DE)
(72) Erfinder: KEMMER, Friedrich, D-40878 Ratingen (DE); ULZHÖFER, Adolf, D-40878 Ratingen (DE); SCHNELLE, Hendrik, D-41541 Dormagen (DE)
(74) Vertreter: Hennicke, Ernst Rüdiger
(86) Internationale Anmeldenummer: PCT/DE1996/001891
(87) Internationale Veröffentlichungsnummer: WO 1997/013125

(56) Entgegenhaltungen:
- DE-A- 1 456 699
- DE-A- 3 614 559
- FR-A- 2 545 797
- GB-A- 1 549 785
- GB-A- 2 109 566
- US-A- 2 830 803

## Beschreibung

### Techniches Gebiet

Die Erfindung betrifft ein Bunkerabzugs- und Aufgabeplattenband mit automatischer Wiege- und Dosiereinrichtung für Schüttgüter, wobei die Plattenelemente des Plattenbandförderers mit mindestens einem angetriebenen, über Antriebs- und Umlenkräder umgelenkten endlosen Zugelement zugfes! gekoppelt sind und im fördernden Obertrum mittels an ihrer Unterseite angeordneter Laufrollen auf Laufschienen rollend abgestützt sind, und wobei auf der Förderstrecke des Plattenbandförderers eine Wägestation angeordnet ist, an der vertikal bewegliche Laufschienenabschnitte eine auf elektrischen Kraftmeßvorrichtungen aufliegende, im Förderbetrieb das Auflagegewicht der über sie hinweglaufenden beladenen Plattenelemente messende Wägebrücke bilden.

### Stand der Technik

Bunkerabzugsbänder dieser Art, mit deren Hilfe auch schwierig zu fördernde, z.B. zum Kleben neigende Schüttgüter unterschiedlicher Art aus Bunkern abgezogen und nachgeschalteten Anlagen möglichst mengendosiert zugeführt werden, sind bekannt. Sie sind so ausgebildet, daß der Plattenbandförderer das Schüttmaterial in einer fest eingestellten Schichthöhe aus dem Bunker abzieht und es in den Bereich der Wägestation fördert. Die hier auftretenden Kräfte aus dem Gewicht der Plattenelemente und dem darauf ruhenden Schüttmaterial werden an der Wägestation über Laufrollen auf die als Wägebrücke ausgebildeten Laufschienen übertragen, die auf elektrischen Kraftmeßdosen aufliegen. Mit Hilfe einer Tachomaschine wird eine der Plattenbandgeschwindigkeit proportionale elektrische Größe erhalten, die multipliziert mit den Wägeergebnissen, d.h. mit den in den Kraftmeßdosen erfaßten Auflagedrücken ein elektrisches Abbild des momentanen Förderstromes (Förderleistung) ergibt, wobei aus den momentanen Förderströmen durch elektrische Integration die geförderte Schüttgutmenge errechnet wird. Die Verarbeitung der elektrischen Größen erfolgt mittels einer elektronischen Auswerteeinheit, mit deren Hilfe somit eine Mengendosierung der Schüttgüter möglich ist. Die Wägebrücke besteht im wesentlichen aus zwei Laufschienenabschnitten, die z.B. mit Hilfe von Lenkern momentenfrei auf unter ihnen, angeordneten elektrischen Druckmeßdosen verlagert sind, welche die Wägeergebnisse in Form elektrischer Größen liefern. Über die gesteuerte oder geregelte Fördergeschwindigkeit des Plattenbandes und/oder die Beladungs- bzw. Schichthöhe des Schüttmaterials auf diesem läßt sich die Mengendosierung des Schüttguts bewirken (DE-A-1 456 699).

Die vorgenannte Plattenband-Bunkerabzugsvorrichtung hat den Vorteil, daß mit der Integration der Wägestation in den Plattenbandförderer auf die Verwendung von dem Bunkerabzugssystem nachgeschalteten, als Gurtbandförderer ausgeführten Verwiegebändern verzichtet werden kann, die mit verhältnismäßig hohen Meßgenauigkeiten arbeiten. Allerdings sind die mit den Wägebrücken ausgestatteten Plattenbandförderer in ihrer Wägegenauigkeit mit Fehlerquellen behaftet, da die horizontalen Zugkräfte der mit den Plattenelementen verbundenen, z.B. aus Laschenketten bestehenden endlosen Zugkräfte des Förderers die an der Wägestation zu messenden Vertikalkräfte (Auflagegewicht) störend beeinflussen. Um hier Abhilfe zu scharffen, hat man in der Praxis den Plattenbandförderer mit seiner Schüttgutaufgabe höhenverstellbar aufgehängt und dabei die zur Wägung verwendete Kraftmeßdose an der Aufhängung angeordnet. Diese Anordnung führt zu einem erhöhten Bauaufwand.

### Darstellung der Erfindung

Aufgabe der Erfindung ist es, eine Einrichtung der eingangs genannten Art mit vergleichsweise geringem Aufwand so auszugestalten, daß die sich aus den Zugkräften des oder der angetriebenen Zugelemente (Kettenbänder) ergebenden, die Wägeergebnisse verfälschenden Störeinflüsse eliminiert werden und demgemäß mit erheblich verbesserter Meßgenauigkeit gearbeitet werden kann.

Diese Aufgabe wird erfindungsgemäß dadurch gelöst, daß zur Entkopplung der. Zugelement-Zugkräfte von den an der Wägebrücke gemessenen Auflagekräften das oder die Zugelemente begrenzt frei höhenbeweglich mit den Plattenelementen verbunden ist bzw. sind und die Plattenelemente des Plattenbandförderers mittels Querbolzen mit dem oder den Zugelementen gekoppelt werden, die Bolzenlöcher an fest mit den Plattenelementen verbundenen Kupplungsteilen mit dem zur Entkopplung notwendigen Vertikalspiel durchgreifen.

Nach der Erfindung werden also die sich aus den Antriebskräften des oder der endlosen Zugelemente (Kettenbänder) ergebenden unterschiedlichen Horizontalkräfte von den an der Wägestation zu messenden Vertikalkräften, die der zu verwiegenden Masse entsprechen, entkoppelt, so daß die Störeinflüsse dieser Horizontalkräfte in Bezug auf das Wägeergebnis eliminiert werden. Damit ist es möglich, bei Verwendung der in den Plattenbandförderer integrierten, von der Wägebrücke gebildeten Wägestation mit erheblich verbesserten Meßgenauigkeiten zu arbeiten, so daß beim Schüttgutabzug und bei der Schüttgutübergabe mit entsprechend hohen Zuteil- bzw. Dosierungsgenauigkeiten gearbeitet werden kann.

Die Bolzenlöcher der Kupplungsteile können als vertikale Langlöcher mit ebenen seitlichen Begrenzungsflächen ausgeführt sein, wobei die Querbolzen im Durchgriffsbereich der Bolzenlöcher mit entsprechend ebenen seitlichen Führungsflächen versehen sind. Für die endlosen Zugelemente können, wie üblich, Laschenketten verwendet werden, wobei die vorgenannten Querbolzen zweckmäßig an den Laschengelenken angeordnet sind, also zugleich die Gelenkbolzen der Laschengelenke bilden. Weiterhin empfiehlt es sich, die mit den Plattenelementen in Vertikalrichtung schwimmend gelagerten Laschenketten mit auf Führungsbahnen laufenden Auflagerollen zu bestücken, die dabei jedoch lediglich der rollenden Führung der Laschenketten dienen, nicht aber der Abstützung des Auflagegewichtes des Plattenbandes. Letzteres wird allein von den an den Plattenelementen unterseitig in Rollenhaltern gelagerten, auf den Laufschienen laufenden Laufrollen abgesetzt.

Im übrigen ist die Anordnung zweckmäßig so getroffen, daß die am Bunkerauslauf über dem Plattenband angeordnete Schüttgut-Aufgabe, wie bekannt, als eine das Plattenband mit vorgegebener Schichthöhe des Schüttguts beschickende Schüttgut-Aufgabe ausgebildet ist.

Die Erfindung wird nachfolgend im Zusammenhang mit dem in der Zeichnung gezeigten Ausführungsbeispiel näher erläutert. In der Zeichnung zeigen:

### Kurze Beschreibung der Zeichnungen

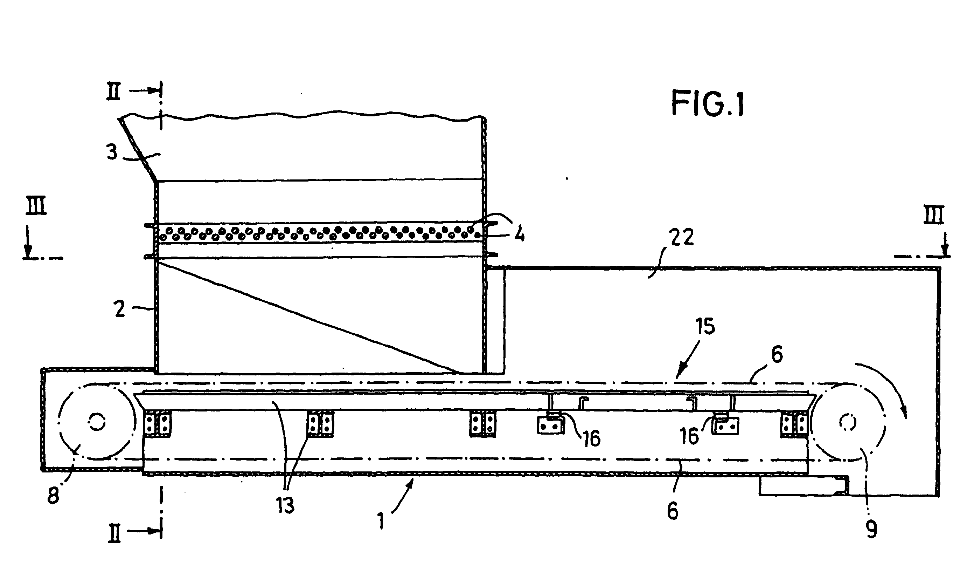

- Fig. 1: ein erfindungsgemäßes Bunkerabzugs- und Aufgabeplattenband mit zugeordneter Wägestation im Längsschnitt;
- Fig. 2: einen Vertikalschnitt nach Linie II-II der Fig. 1;

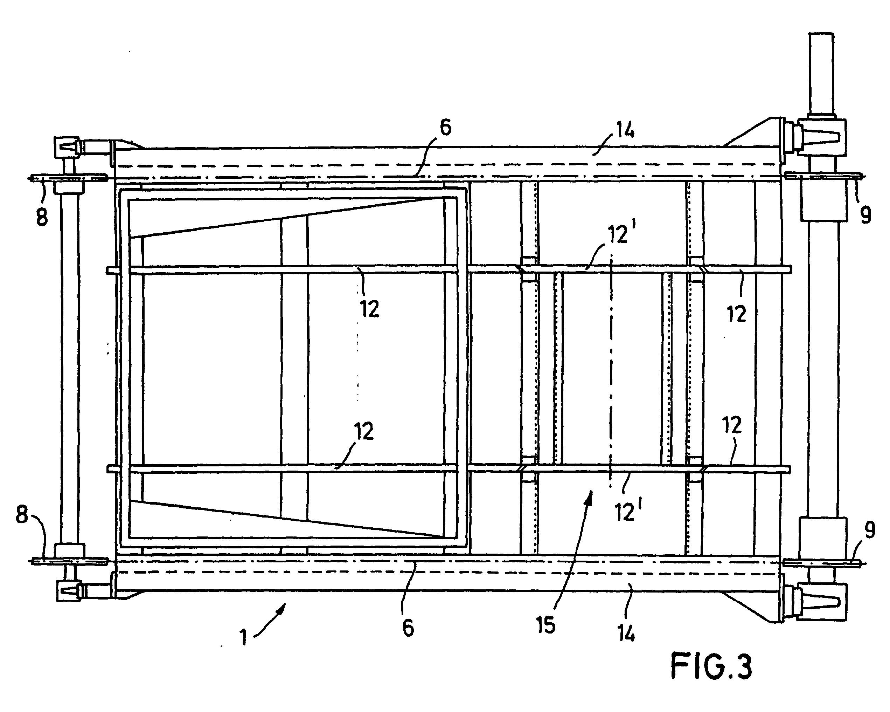

- Fig. 3: einen Horizontalschnitt nach Linie III-III der Fig. 1, wobei jedoch das Plattenband und die äußere Verkleidung zur Darstellung der Wägestation fortgelassen sind;
- Fig. 4: den in Fig. 2 mit IV bezeichneten Teilausschnitt des Plattenbandförderers in größerem Maßstab;
- Fig. 5: ein Schnitt nach Linie V-V der Fig. 4.

### Beste Wege zur Ausführung der Erfindung

Das dargestellte Bunkerabzugs- und Aufgabeplattenband mit automatischer Wiege- und Dosiereinrichtung für Schüttgüter unterschiedlicher Art ist im Grundaufbau bekannt.

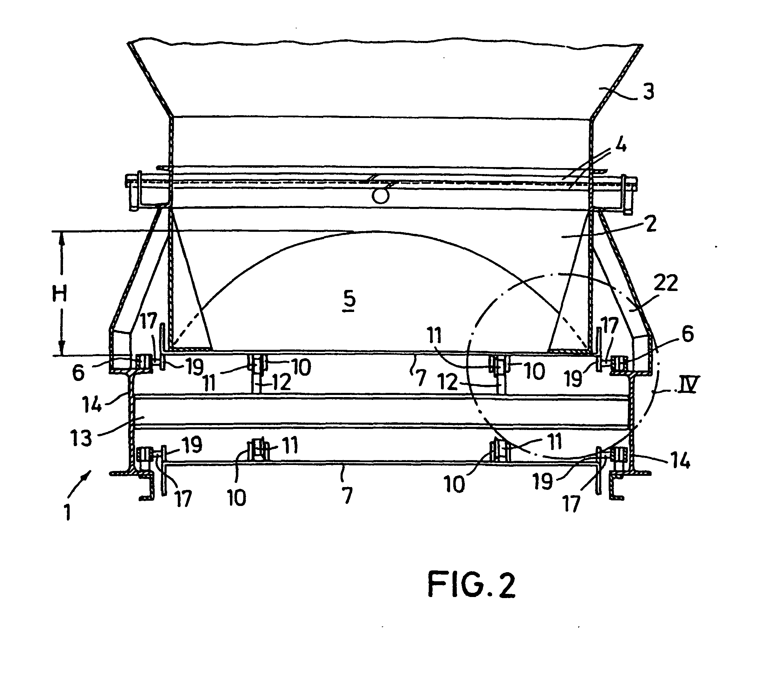

Der Plattenbandförderer 1 ist mit seinem Aufgabeende unterhalb des Bunkerauslaufs 2 eines hier nur in seinem Auslaufbereich gezeigten Schüttgutbunkers 3 angeordnet, wobei sich am Bunkerauslauf, wie üblich, ein Absperrschieber 4 befindet. Dabei ist der Bunkerauslauf 2, wie bekannt, so ausgeführt, daß bei geöffnetem Absperrschieber 4 das fördernde Obertrum des Plattenbandförderers 1 mit einer vorgegebenen Schichthöhe, die in Fig. 2 durch das Maß H bezeichnet ist, mit dem aus dem Bunker auslaufenden Schüttgut beschickt wird. Gemäß Fig. 2 ist die am Bunkerauslauf 2 über dem Plattenband angeordnete Schüttgutaufgabe so ausgebildet, daß das Plattenband, wie bei 5 in Fig. 2 gezeigt, mit einem gerundeten Schüttguthaufen vorbestimmter Höhe H beschickt wird. Der Plattenbandförderer weist zwei parallele endlose Zugelemente in Gestalt von Laschenketten 6 auf, die mit den einzelnen Plattenelementen 7 des Plattenbandes zu dessen Mitnahme zugfest verbunden sind und die an den Enden des Förderers über Antriebsund Umkehrräder 8 und 9 angetrieben und umgelenkt werden, zweckmäßig mit regelbarer Fördergeschwindigkeit. Die das endlose Plattenband bildenden Plattenelemente 7 weisen an ihrer der Schüttgut-Transportseite abgewandten Seite in Rollenhaltern 10 gelagerte Laufrollen 11 auf, mit denen sich das fördernde Obertrum des Plattenbandes auf zwei zueinander parallelen Laufschienen 12 rollend abstützt und führt. Die Laufschienen 12 sind in einem Seitenabstand zueinander, der kleiner ist als die Breite der Plattenelemente 7, am feststehenden Rahmen 13 des Förderers angeordnet, der an seinen beiden Seiten hier als I-Träger ausgebildete Seitenbegrenzungen 14 aufweist, in deren Bereich die beiden Laschenketten 6 laufen.

In Förderrichtung hinter dem Bunkerauslauf 2, also zwischen diesem und den das Abwurfende des Plattenbandförderers bildenden Umlenkrädern 9, befindet sich eine Wägestation 15, die als sogenannten Wägebrücke ausgebildet ist. Diese besteht aus zwei Laufschienenabschnitten 12', die jeweils zwischen den fest angeordneten Laufschienen 12 vertikal beweglich angeordnet sind und untereinander über eine Querverbindung zu der Wägebrücke verbunden sein können. Dabei ist die Wägebrücke an jeder ihrer beiden in Fluchtlinie zu den festen Laufschienen 12 verlaufenden Laufschienenabschnitten 12' auf elektrischen Kraftmeßvorrichtungen 16 abgestützt, die am Fördererrahmen unterhalb des fördernden Obertrums des Plattenbandes angeordnet sind und aus elektrischen Kraftmeßdosen od.dgl. bestehen. Diese Kraftmeßdosen messen im Förderbetrieb des Plattenbandförderers 1 das Auflagegewicht des über die Wägebrücke hinweglaufenden, mit Schüttgut beladenen Plattenbandes. Die so ermittelten momentanen Meßwerte werden als elektrische Größen einer nicht-dargestellten elektronischen Auswerteeinheit zugeführt, die Bestandteil der Wiege- und Dosiereinrichtung ist und die aus den elektrischen Meßgrößen der Wägemessungen und den ihr ebenfalls zugeführten, die Fördergeschwindigkeit des Plattenbandes repräsentierenden Meßgrößen die Mengendosierung des Schüttguts bewirkt, wie dies an sich bekannt ist.

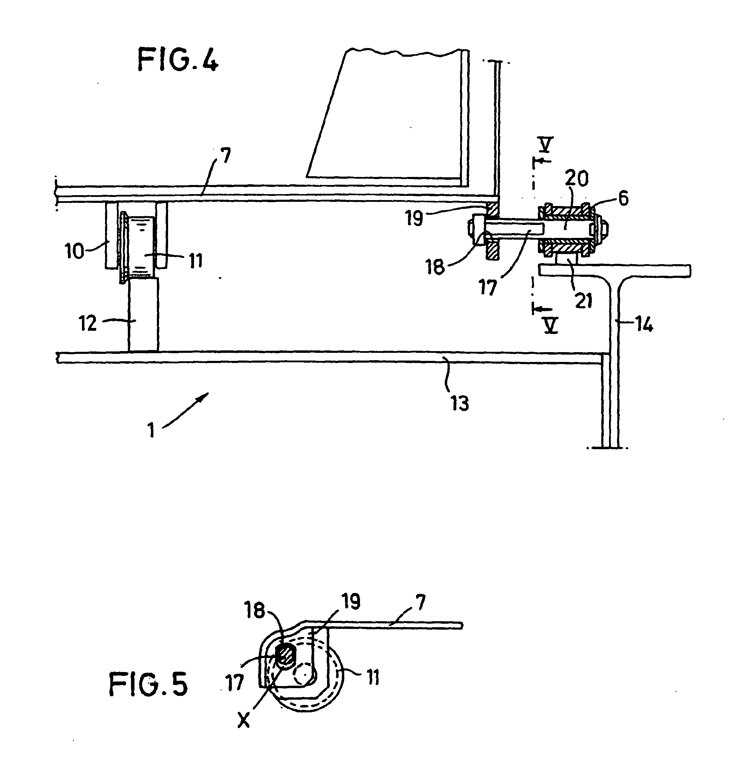

Die Zugkräfte in den angetriebenen Laschenketten 6 können sich störend auf den Wägevorgang an der Wägestation 15 auswirken. Um diese Störeinflüsse auszuschalten und mit hoher Meßgenauigkeit arbeiten zu können, sind die Laschenketten 6 begrenzt frei höhenbeweglich mit den Plattenelementen 7 des Plattenbandes verbunden, so daß eine Entkopplung der Zugkräfte der Laschenketten von den an der Wägebrücke gemessenen Auflagekräften erreicht wird. Im gezeigten Ausführungsbeispiel wird diese Entkopplung, wie vor allem in den Fig. 4 und 5 dargestellt, dadurch bewirkt, daß die Plattenelemente 7 des Plattenbandes mittels Querbolzen 17 mit den Laschenketten 6 gekoppelt werden, wobei die Querbolzen 17 Bolzenlöcher 18 an mit den Plattenelementen 7 unterseitig fest verbundenen Kupplungsteilen 19 mit einem für die Entkopplung ausreichend groß bemessenen Vertikalspiel durchgreifen. Die Kupplungsteile 19 sind im gezeigten Ausführungsbeispiel als Kupplungsplatten ausgebildet. Wie vor allem Fig. 5 erkennen läßt, sind die Bolzenlöcher 18 als vertikale Langlöcher mit zueinander parallelen ebenen vertikalen Seitenflächen ausgeführt, wobei die Querbolzen 17 im Durchgriffsbereich der Bolzenlöcher mit entsprechend ebenen seitlichen Führungsflächen versehen sind, so daß sich die Querbolzen 17 in den Bolzenlöchern 18 um das vorgegebene Vertikalspiel X (Fig. 5) führen. Es versteht sich, daß die Laufrollen 11 praktisch spielfrei an den Rollenhaltern 10 gelagert sind, während das zur Entkopplung der Horizontal- und Vertikalkräfte vorgesehene Vertikalspiel X so bemessen ist, daß sich die Zugkräfte in den Laschenketten 6 beim Durchlauf des beladenen Plattenbandes durch die Wägestation 15 nicht die Wägeergebnisse beeinflussend auswirken können. Die Querbolzen 17 sind an den Laschengelenken der Laschenketten 6 angeordnet, d.h. sie bilden hier zugleich die Gelenke der Laschenketten.

Wie vor allem Fig. 4 zeigt, sind die mit den Plattenelementen 7 in Vertikalrichtung um das Vertikalspiel schwimmend gelagerten Laschenketten 6 mit Auflagerollen 20 bestückt, die sich auf Führungsbahnen abwälzen. Diese bestehen aus schmalen Führungsleisten 21, die an den Seitenbegrenzungen 14, d.h. an den horizontalen oberen und unteren Flanschen der die Seitenbegrenzungen 14 bildenden I-Profile angeordnet sind. Mit Hilfe dieser Auflagerollen 20 wird lediglich eine Kettenführung im Ober- und Untertrum des Plattenbandförderers bewirkt, aufgrund des Vertikalspiels X das Auflagegewicht des Plattenbandes aber nicht übertragen.

Die vorstehend beschriebene Anbindung der Plattenelemente 7 über die Querbolzen 17 an den Zugelementen bzw. Laschenketten 6 mit dem Vertikalspiel X führt zu einer baulich besonders einfachen Entkopplung der horizontalen Zugkräfte der Zugelemente und der an der Wägestation 15 zu messenden Vertikalkräfte (Auflagegewicht des beladenen Plattenbandes). Es versteht sich aber, daß die Entkopplung auch mit einer anderen, in Vertikalrichtung schwimmenden Anbindung der Plattenelemente an den Zugelementen bzw. den Laschenketten 6 erreichbar ist. Der gesamte Plattenbandförderer 1, der mit einer Verkleidung 22 versehen sein kann, ist fest und stationär unterhalb des Bunkers 3 und seines Bunkerauslaufs 2 gelagert. Mit der beschriebenen Anordnung wird somit ein Plattenbandförderer mit einer automatischen Wiege- und Dosiereinrichtung, insbesondere auch für schlecht fließende Schüttgüter, geschaffen, mit der sich die von den Kraftmeßvorrichtungen 16 erfaßten Auflagedrücke, d.h. die Vertikalkräfte des jeweiligen Schüttgut- und Plattenbandgewichtes sehr exakt ohne Störeinflüsse durch die Zugkräfte der Laschenketten messen und zur Schüttgutdosierung auswerten lassen. Es versteht sich, daß die Plattenelemente 7 des Plattenbandförderers mit seitlichen Begrenzungsflächen ausgeführt werden können, um ein seitliches Ablaufen des Schüttguts vom Plattenband zu vermeiden. Der Plattenbandförderer 1 bildet zugleich ein Aufgabeplattenband, welches das Schüttgut mengendosiert einem nachgeschalteten Aggregat od.dgl. zuführt.

## Patentansprüche

1. Bunkerabzugs- und Aufgabeplattenband mit automatischer Wiege- und Dosiereinrichtung für Schüttgüter, wobei die Plattenelemente (7) des Plattenbandförderers (1) mit mindestens einem angetriebenen, über Antriebs- und Umlenkräder umgelenkten endlosen Zugelement (6) zugfest gekoppelt und im fördernden Obertrum mittels an ihrer Unterseite angeordneter Laufrollen (11) auf Laufschienen (12) rollend abgestützt sind, und wobei auf der Förderstrecke des Plattenbandförderers eine Wägestation angeordnet ist, an der vertikal bewegliche Laufschienenabschnitte (12') eine auf elektrischen Kraftmeßvorrichtungen (16) aufliegende, im Förderbetrieb das Auflagegewicht der über sie hinweglaufenden beladenen Plattenelemente messende Wägebrücke bilden, wobei zur Entkopplung der Zugelement-Zugkräfte von den an der Wägebrücke gemessenen Auflagekräften das oder die Zugelemente (6) begrenzt frei höhenbeweglich mit den Plattenelementen (7) verbunden ist bzw. sind und die Plattenelemente (7) mittels Querbolzen (17) mit dem oder den Zugelementen (6) gekoppelt sind, die Bolzenlöcher (18) an fest mit den Plattenelementen (7) verbundenen Kupplungsteilen (19) mit Vertikalspiel (X) durchgreifen.

2. Bunkerabzugs- und Aufgabeplattenband nach Anspruch 1, **dadurch gekennzeichnet, daß** die Bolzenlöcher (18) der Kupplungsteile (19) als vertikale Langlöcher mit ebenen seitlichen Begrenzungsflächen ausgeführt sind und die Querbolzen (17) im Durchgriffsbereich der Bolzenlöcher (18) mit entsprechend ebenen seitlichen Führungsflächen versehen sind.

3. Bunkerabzugs- und Aufgabeplattenband nach Anspruch 1 oder 2, **dadurch gekennzeichnet, daß** die zueinander parallelen Zugelemente aus Laschenketten (6) bestehen, wobei die Querbolzen (17) an den Laschengelenken angeordnet sind bzw. diese bilden.

4. Bunkerabzugs- und Aufgabeplattenband nach einem der Ansprüche 1 bis 3, **dadurch gekennzeichnet, daß** die mit den Plattenelementen (7) in Vertikalrichtung schwimmend gelagerten Laschenketten (6) mit auf Führungsbahnen, z.B. Führungsleisten (21) laufenden Auflagerollen (20) bestückt sind.

5. Bunkerabzugs- und Aufgabeplattenband nach einem der Ansprüche 1 bis 4, **dadurch gekennzeichnet, daß** die am Bunkerauslauf (2) über dem Plattenband angeordnete Schüttgutaufgabe, wie bekannt, als eine das Plattenband mit vorgegebener Schichthöhe des Schüttguts beschickende Schüttgutaufgabe ausgebildet ist.

## Claims

1. A bunker discharge and feeding plate conveyor having an automatic weighing and metering device for bulk goods, wherein the plate elements (7) of the plate conveyor (1) are coupled fixed in traction to at least one endless, driven traction element (6) which is deflected over driving and deflection wheels (8, 9), and are supported with their conveying upper section rolling on running rails (12) by means of running rollers (11) disposed on their underside, and wherein a weighing station (15) is disposed on the conveying section of the plate conveyor, at which weighing station vertically movable running rail sections (12') form a weighbridge which rests on electrical force measuring devices (16) and which measures the loaded weight of loaded plate elements moving over it during a conveying operation, whereas in order to separate the traction forces of the traction element from the loaded weights measured at the weighbridge the traction element or elements (6) is or are attached to the plate elements (7) with a limited extent of free vertical movement and the plate elements (7) are coupled to the traction element or elements (6) by means of transverse studs (17) which pass, with a vertical clearance (X), through stud holes (18) in coupling parts (19) which are fixedly attached to the plate elements (7).

2. A bunker discharge and feeding plate conveyor according to claim 1, **characterised in that** the stud holes (18) in the coupling parts (19) are produced as vertical slots with flat lateral delimiting faces, and the transverse studs (17) are provided with correspondingly flat lateral guide faces in their region which passes through the stud holes (18).

3. A bunker discharge and feeding plate conveyor according to claim 1 or 2, **characterised in that** the mutually parallel traction elements consist of plate link chains (6), wherein the transverse studs (17) are disposed on the plate links or form the latter.

4. A bunker discharge and feeding plate conveyor according to any one of Claims 1 to 3, **characterised in that** the plate links (6), which are mounted floating vertically with the plate elements (7), are equipped with supporting rollers (20) which run on guide tracks, e.g. guide rails (21).

5. A bunker discharge and feeding plate conveyor according to any one of claims 1 to 4, **characterised in that** the bulk goods feed which is disposed at the bunker outlet (2) above the plate conveyor is constructed in the known manner as a bulk goods feed which loads the plate conveyor with a predetermined layer height of the bulk goods.

## Revendications

1. Bande d'extraction sous silos à plaques de chargement comportant un dispositif automatique de pesage et de dosage pour produits en vrac, les éléments formant plaques (7) de la bande transporteuse à plaques (1) étant couplés et solidaires en traction avec au moins un élément de traction (6) sans fin entraîné, amené à changer de direction par des roues d'entraînement et de déviation (8, 9) et, dans la section supérieure de transport, s'appuyant sur des rails de roulement (12), par l'intermédiaire de galets de roulement (11) montés sur leur face inférieure, et un poste de pesage (15) étant disposé sur la voie de transport de la bande transporteuse à plaques, au niveau duquel des sections de rails de roulement (12'), verticalement mobiles, constituent un pont de pesage monté sur des capteurs dynamométriques (16) qui mesure le poids de charge des éléments formant plaques chargés qui passent sur lui, lorsque la bande transporteuse est en service, ce qui pour découpler les forces de traction des éléments de traction des forces de charge mesurées au niveau du pont de pesage, le ou les éléments formant plaques (6) est/sont relié(s) aux éléments formant plaques (7), avec possibilité de se déplacer librement en hauteur de manière limitée et les éléments formant plaques (7) sont couplés avec le ou les élément(s) de traction (6) au moyen de goupilles transversales (17) qui traversent, avec un jeu vertical (X), des perçages pour goupilles (18) ménagés dans des parties d'accouplement (19) reliées fixement aux éléments formant plaques (7).

2. Bande d'extraction sous silos à plaques de chargement selon la revendication 1, **caractérisée en ce que** les perçages pour goupilles (18) des parties d'accouplement (19) sont des perçages oblongs verticaux présentant des surfaces latérales de délimitation planes et **en ce que** les goupilles transversales (17), dans la zone où elles traversent les perçages pour goupilles (18), présentent des surfaces de guidage latérales planes correspondantes.

3. Bande d'extraction sous silos à plaques de chargement selon la revendication 1 ou 2, **caractérisée en ce que** les éléments de traction, parallèles entre eux, sont constitués de chaînes articulées (6), les goupilles transversales (17) étant placées au niveau des articulations, ou constituant celles-ci.

4. Bande d'extraction sous silos à plaques de chargement selon l'une des revendications 1 à 3, **caractérisée en ce que** les chaînes articulées (6), qui flottent dans le sens vertical avec les éléments formant plaques (7), sont équipées de galets d'appui (20) circulant sur des voies de guidage, par exemple des barres de guidage (21).

5. Bande d'extraction sous silos à plaques de chargement selon l'une des revendications 1 à 4, **caractérisée en ce que** le chargement de produits en vrac qui se trouve sur la bande à plaques, au niveau de la sortie (2) du silo, comme ceci est connu, est conformé en chargement chargeant la bande à plaques selon une hauteur de couche de produits en vrac prédéterminée.
